# EUROPEAN PATENT SPECIFICATION

(11) **EP 2 785 592 B1**
(45) Date of publication and mention of the grant of the patent: **02.08.2017**
(21) Application number: 12798247.8
(22) Date of filing: 27.11.2012
(51) Int. Cl.: B64D 37/32, B64D 13/06, B01D 51/00

(54) **ON BOARD INERT GAS GENERATION SYSTEM**
BORDEIGENES INERTGASERZEUGUNGSSYSTEM
SYSTÈME DE GÉNÉRATION DE GAZ INERTE EMBARQUÉ

(30) Priority: 29.11.2011 IN 3415DE2011; 03.02.2012 GB 201201891
(43) Date of publication of application: 08.10.2014
(73) Proprietor: Eaton Limited, Titchfield Fareham Hampshire PO14 9ED (GB)
(72) Inventor: MASSEY, Alan Ernest, Southampton, Hampshire SO316 NN (GB); DAS, Alok, Pune 411014 (IN); JOSHI, Mahesh Prabhakar, Pune 411033 (IN); MAHALTATKAR, Kartikeya Krishnoji, Pune 411014 (IN)
(74) Representative: Eaton IP Group EMEA
(86) International application number: PCT/EP2012/073656
(87) International publication number: WO 2013/079454

(56) References cited:
- EP-A1- 0 487 241
- EP-A2- 2 163 476
- GB-A- 737 393
- US-A1- 2005 223 895
- US-A1- 2005 247 197
- US-A1- 2006 117 956

## Description

This invention relates to an on board inert gas generation system for generation of inert gas on board an aircraft to facilitate inerting of the fuel tanks and other areas on board the aircraft.

In this specification the widely accepted terminology is employed with the term 'inert gas generation' meaning the generation of an oxygen depleted or 'nitrogen-enriched atmosphere' (NEA). In recent years the move towards the use of composites in the construction of aircraft wings has meant that the temperatures within the fuel tanks is greater than that of wings of conventional material due to the lower thermal conduction of the composite. Thus there is an even greater need for effective inerting of the aircraft fuel tanks in composite wings due to the greater temperatures experienced. It is well known to use one or more filters or 'air separation modules' (ASMs) which allow separation of a supply of inlet air into a nitrogen-enriched air portion (NEA) and an oxygen-enriched air portion (OEA). In order to run air separation modules efficiently, they need to be supplied with inlet air at a relatively high pressure (typically 40psig (2.76 x 10⁵ Pag) or more). It is possible to operate at lower pressures but this would mean that more air separation modules would be required with the consequent increase in weight and complexity, which is undesirable. By way of illustration if the air supplied to an ASM is at 15 psig, then ten ASMs would be required each weighing approximately 27kg. But if the inlet air is at 56 psig only two ASMs are required to provide the required NEA capacity. In the past, the air separation modules have been supplied with high pressure bleed air from the main aircraft power plant. This has been bled off the compressor, cooled, filtered and then supplied to the ASM or ASMs. This system works well but there is an increasing demand on aircraft manufacturers to reduce the specific fuel consumption (SFC) of the aircraft. It is known that bleeding high pressure air from the compressor has an adverse effect on SFC and so there is now a trend to cease use of high pressure bleed air so that the engine performance can be optimised. This means that an alternative source of fluid for supply to the air separation module needs to be found and at an elevated pressure for the reasons given above.

US2005/0247197, which is considered the closest prior art, describes an inert gas generating system for generating inert gas on a vehicle having a fuel tank and a fuel tank vent including an inlet for receiving a flow of gas from a gas source, a heat exchanger downstream from the inlet and in fluid communication with the inlet for cooling gas received from the inlet, and a gas separation module downstream from the heat exchanger for separating gas received from the heat exchanger into a nitrogen-enriched gas flow and an oxygen-enriched gas flow.
US2006/0117956 describes an on board inert gas generation system which uses two compressors or stages arranged in series to provide compressed air to the air separation module. In order to provide high pressures to the air separation module, whilst coping with the severe strictures imposed by compressor rotor blade design limitations, US2006/0117956 provides a system in which two centrifugal compressors are run in series. The compressed air from the second stage is passed to an air separation module, but a vent is provided between the second stage compressor and the air separation module to enable the flow from the second compressor to be increased, which results in the second compressor having an increased output pressure whilst using the same compressor rotor blade design. Although this provides the centrifugal compressor with a wider operating range of output flows, it does mean that the operating efficiency is very poor at low flow rates. Since the aircraft operates at cruise during the major part of its operation, this means that for the majority of the time the centrifugal compressor arrangement is operating at well below its optimal operating efficiency. Thus the inherent characteristics of a centrifugal compressor are ill-adapted for the operating regime and variations in the flow rates and pressures required during the cycle of ascent, cruise and descent of an aircraft and have resulted in unnecessarily complex solutions such as those set out above, which only partly tackle the issues. As noted, the ASM operates effectively at pressures above 40 psig (2.76 x 10⁵ Pag). Lower pressures require a larger ASM or several ASMs (and therefore increase weight) for a given duty, whilst higher pressures may exceed the maximum working pressure of the ASM. The flow requirement for an inerting system varies with flight phase. Descent requires the maximum NEA flow-rate as the inerting system is required to re-pressurise the fuel tanks to equalize the tank and ambient pressures. Cruise requires minimum flow-rate as the NEA flow-rate is only required to make up the increase in ullage volume created by fuel burn. The ratio between maximum descent flow and cruise flow is typically up to 6:1 depending on aircraft type, cruise altitude and descent rate. This does not fit well with typical centrifugal compressor characteristics which have a very narrow flow range bounded by the surge limit and the diffuser 'choking' limit. In a centrifugal compressor flow can be increased by increasing speed but the pressure generated increases as the square of the speed, and the power required increases by the cube of the speed. The additional pressure must be regulated to avoid damage to the ASM. This makes it very inefficient over the flow range required by an inerting system.

By contrast, we have found that the characteristics of a positive displacement type compressor are very well suited to provide the large variations in flow, because they provide a flow rate generally proportional to speed, at a pressure sufficient to supply the pressure required by the ASM and without the substantial pressure increases at higher flow rates, which can reduce ASM life. Therefore we have designed an on board inert gas generation system which is intended to obviate some of the problems encountered with centrifugal compressor based systems.

Accordingly, in one aspect, this invention provides an on board inert gas generation system for use in an aircraft having a source of low pressure air, said gas generation system including a positive displacement compressor having an inlet for receiving a portion of said low pressure air, and an outlet in flow communication with an air separation module, the positive displacement compressor further including an integrated cooling means provided internally of the compressor for cooling the compressed air delivered by said compressor.

Preferably the positive displacement compressor is a rotary device providing a substantially constant and continuous flow in use.

Preferably a portion of the output of the compressor is passed to the inlet thereof.

The term 'low pressure air' used herein means air which is below the inlet pressure required by the air separation module, is generally at a pressure less than 40psig and typically in the range of from 20psig to 30psig. In one scheme the low pressure air may be low pressure engine bleed air. In another scheme the low pressure air may be ram air.

In one arrangement, in order to provide at least some of the power to drive the compressor, the gas generation system may include a turbine for receiving and expanding a portion of cabin air. The turbine may be drivably connected to said positive displacement compressor to provide direct mechanical drive. Instead, or additionally, the turbine may be drivably connected to an electrical generator.

In a motor-driven configuration, an electric motor may be drivably connected to said positive displacement compressor, which conveniently receives electrical energy from said generator or an energy storage arrangement associated therewith. Furthermore, said electric motor may be connectable to receive electrical energy from an aircraft electrical supply. The motor may provide all the power required, or a portion thereof, with the balance being provided by shaft power, for example from a turbine as above.

A power controller may be conveniently provided for selectively receiving electrical energy from said generator (or an electrical storage arrangement associated therewith), and electrical energy from the aircraft electrical supply, and for controllably supplying electrical energy to said electric motor.

The inert gas generation system may include a heat exchanger in the flow path between said positive displacement compressor and said air separation module, the heat exchanger having heating and cooling passes for fluid, with the air from said positive displacement compressor being passed along said cooling pass thereby to reduce the temperature of air supplied to said air separation module. The heat exchanger may receive relatively cool ram air from a ram air duct. The system may include a duct for supplying cabin air to the heating pass of said heat exchanger and a duct for supplying said heated air from the heating pass of the heat exchanger to the input of said turbine. In this case a valve may be provided for selectively supplying relatively cool ram air or cabin air to said heat exchanger.

In yet another aspect, this invention provides a method for operating an on board inert gas generation system in an aircraft having a source of low pressure air (e.g. ram air or low pressure engine bleed air), which comprises the steps of:
supplying a portion of said low pressure air to a positive displacement compressor having an integrated cooling means provided internally of the compressor, and
supplying compressed and cooled air from said positive displacement compressor to an air separation module.

The invention also extends to an aircraft incorporating an on board inert gas generating system as set out above.

Whilst the invention has been described above, it extends to any inventive combination or sub-combination of any of the features disclosed herein alone or jointly with others.

By way of example only, certain specific embodiments of the invention will now be described, reference being made to the accompanying drawings, in which:
Figure 1 is a block diagram of a first embodiment of on board inert gas generation system in accordance with this invention;
Figure 2 is a block diagram of a second embodiment of on board inert gas generation system in accordance with this invention,
Figure 3 is a block diagram of a third embodiment of on board inert gas generation system in accordance with this invention;
Figures 4 and 5 are block diagrams of a fourth embodiment of on board inert gas generation system in accordance with this invention;
Figure 6 is an overview of a fifth embodiment of on board inert gas generation system in accordance with this invention incorporating use of a high pressure supercharger with an internal cooling arrangement;
Figure 7 is a more detailed view of the fifth embodiment of Figure 6, and
Figure 8 is a block diagram of a sixth embodiment of on board inert gas generation system in accordance with this invention.

The embodiments described below employ a variable speed mechanically and/or electrically driven positive displacement boost compressor to supply air at suitable pressure and flow to an air separation module to inert the fuel tanks of aircraft. An energy recovery turbine is combined with the compressor to reduce electrical power drain by using cabin air supply for both compressor and turbine.

The embodiments make use of passenger cabin air which is provided by the aircraft Environmental Control System (ECS) which requires power from the propulsion engines and increases engine specific fuel consumption. Having circulated through the cabin the air is then vented to atmosphere through overboard vent valves as a waste product. Using this air for fuel tank inerting purposes incurs no additional increase in Specific Fuel Consumption (SFC) as this has been paid for by the ECS. Cabin pressure is typically 11 or 12 psia at cruise altitude, which is too low for the air separation module (ASM) which separates the air into Nitrogen Enriched Air (NEA) and Oxygen Enriched Air (OEA) and which as noted typically operates at pressures in excess of 40psig. From the ASM the OEA is vented overboard as a waste product and the NEA is passed to the fuel tanks to provide an inert ullage atmosphere. The embodiments below use a turbine to generate power during the cruise phase by using 'free' cabin air to provide power to a variable speed positive displacement compressor.

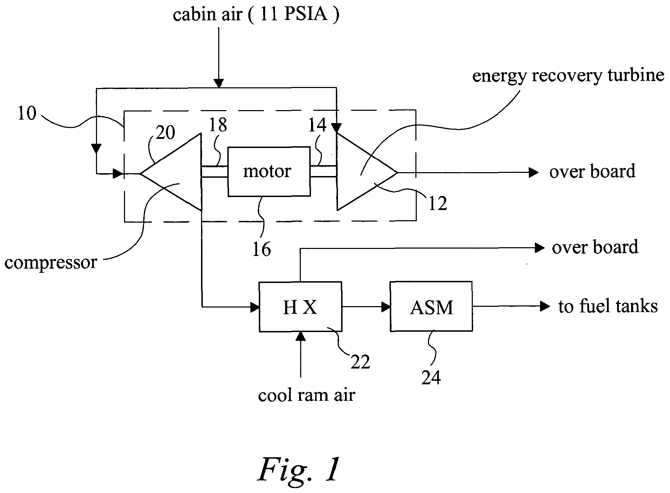

In the first embodiment, illustrated in Figure 1, cabin air (typically at 11Psia) (0.76X10⁵ Pa)) is supplied to a turbo compressor module 10 with a portion of the cabin air being supplied to an energy recovery turbine 12, with the outlet of the turbine 12 being vented overboard. The output shaft 14 of the turbine is connected either directly or via a gearbox or motor 16 to the input shaft 18 of a compressor 20. The compressed cabin air portion supplied from the compressor is passed to the cooling pass of a heat exchanger 22 and thence to an air separation module 24. The NEA from the air separator module 24 is then supplied to the aircraft fuel tanks for inerting. The OEA is vented overboard. The heat exchanger 22 receives relatively cold ram air which passes along the heating pass of the heat exchanger and then is vented overboard. The compressor 20 is a positive displacement compressor or pump designed to have a pressure ratio of between 2 and 4. Any suitable form of positive displacement compressor or pump may be used, similar to those used as superchargers for internal combustion engines and which may typically be based on a modified Roots-type positive displacement pump of a type which does not include internal pressure generation. The positive displacement compressor may be a single stage or multistage device. An example of a suitable device is a Twin Vortex System (TVS) Roots-type supercharger available from Eaton Corporation. In this embodiment, the use of a positive displacement compressor is capable of providing the high flow rates required for descent, without the substantial increase in output pressure that is inherent in a centrifugal compressor. Moreover, in some embodiments the power for the compressor may at least partially supplied by 'free' energy from discharging the cabin air which will be discharged anyway by the cabin environmental control system.

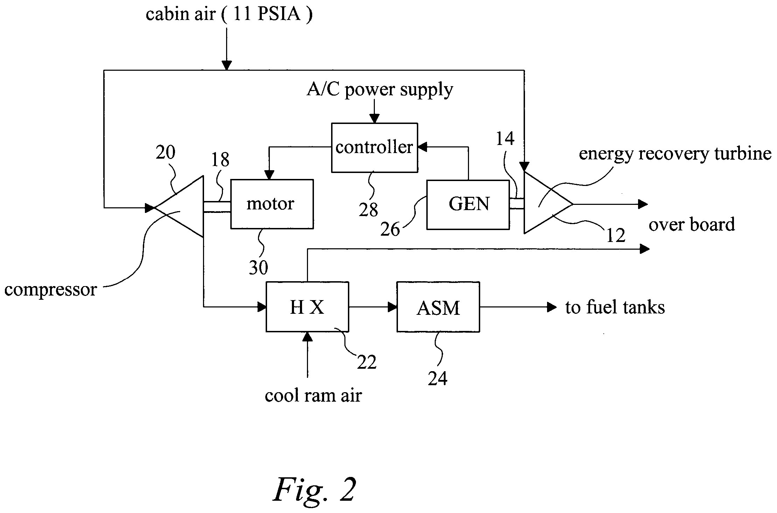

Referring to Figure 2, the second embodiment is closely similar to the first embodiment and similar references will be used. Here the output drive of the energy recovery turbine 12 is supplied to a generator 26 which supplies electrical power to a controller 28 which is also capable of receiving electrical power from the aircraft power supply. The controller 28 supplies electrical power to a motor 30 which drives the drive shaft 18 of the positive displacement compressor 20. The electrical power controller combines and conditions the power produced by the turbine generator 26 with that from the aircraft's supply and controls the speed of the compressor as required for the requirements of cruise and descent.

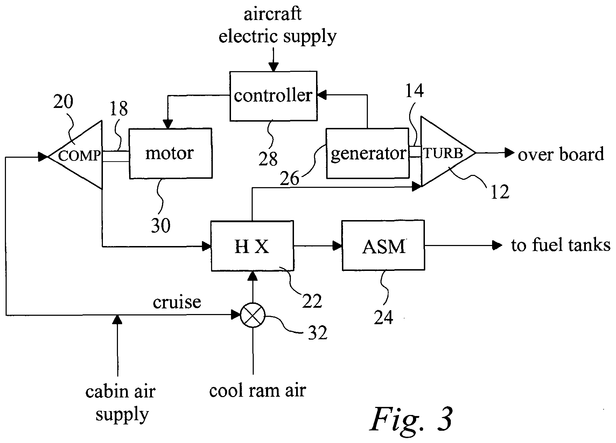

Referring now to Figure 3, the third embodiment is generally similar to the second embodiment in several respects and similar references will be used. As previously, cabin air is used to drive an energy recovery turbine 12 which drives the generator 26 which supplies electrical power to the controller 28. A further portion of the cabin air is supplied to the positive displacement compressor 20. In the third embodiment, however, the portion of cabin air to be supplied to the turbine is initially passed through the heat exchanger 22, instead of ram air. This increases the temperature and thus the enthalpy of the cabin air portion supplied to the turbine and improves power extraction for a given turbine exit temperature, whilst cooling the portion supplied to the air separator module 24. The increased inlet temperature of the cabin air supplied to the turbine can also mitigate against icing of the turbine. As the aircraft descends the pressure ratio between the cabin and the atmosphere reduces with reducing altitude. This results in reduced turbine power and, via the controller 28, the compressor 20 takes an increasing amount of power from the aircraft electrical supply. On the ground the cabin/ambient pressure difference is zero so all the power required by the compressor must be supplied by the aircraft electrical supply. A valve 32 is provided upstream of the heat exchanger so that during descent, and on the ground, the valve 32 may be operated to switch the cooling air for the heating pass from cabin air to ram air. Alternatively, a fan (not shown) may be incorporated in the system to boost the flow rate of the cabin air portion to the heat exchanger when the cabin differential pressure is insufficient to provide the required cooling flow.

An important benefit of the various embodiments described herein is that they reduce SFC at cruise altitude, where aircraft economics are most critical. Descent is a relatively short period where power consumption is less critical and, in any event, sufficient power may be available as large electrical loads (e.g. galley ovens) are not in demand in the descent phase, so the use of electrical power to drive the compressor does not impose constraints on aircraft electrical generator sizing.

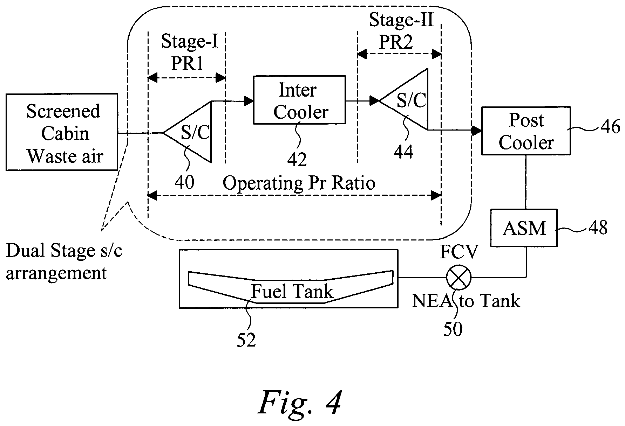

Referring now to Figure 4, there is shown in schematic form a further embodiment in accordance with this invention in which the cabin waste air, following screening, is passed to a multiple stage positive displacement compressor arrangement comprising a first stage positive displacement compressor 40 which receives a portion of the cabin air and compresses it before it passes via an intercooler 42 to a second stage positive displacement compressor 44. The typical pressure ratio across each positive displacement compressor is in the range of from 1:4 to 1:6 for cabin air. The compressed cabin air from the second stage compressor 44 is then passed via a post-cooler 46 to the air separation module 48. The NEA fraction passes via a flow control valve 50 to the fuel tank 52.

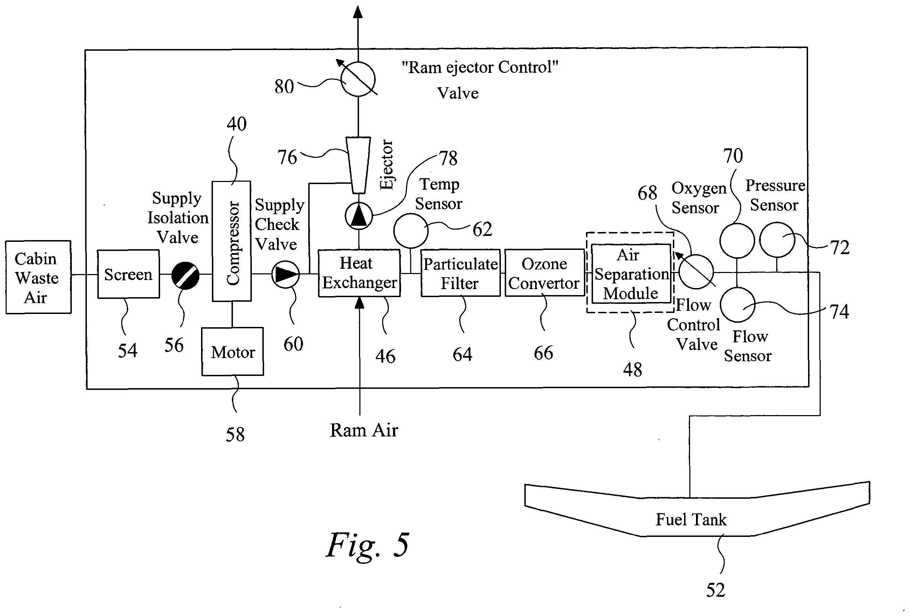

Referring now to Figure 5, there is shown a more detailed arrangement of the arrangement of Figure 4, in which similar components will be given similar reference numerals. The cabin waste air passes via a screening module 54 and a supply isolation valve 56 to a positive displacement compressor 40 which as previously may comprise a single or multi stage positive displacement compressor. The compressor is shown as being driven by a motor 58 but it may equally be driven at least partially or wholly by shaft power supplied e.g. from an expansion turbine (not shown). From the positive displacement compressor 40 the compressed cabin air passes via a supply check valve 60 into a heat exchanger 46 to pass along the cooling pass thereof. A temperature sensor 62 monitors the temperature of the air at the outlet of the heat exchanger 46 before it passes into a particulate filter 64, an ozone converter 66 and thence the air separation module 48. At the outlet of the air separation module 48 is a flow control valve 68 which controls flow of the NEA fraction into the fuel tank 52. The oxygen content, pressure and flow rate are detected by respective sensors 70, 72, 74.

In some situations such as where the aircraft is on the ground or low speed flight the ram air pressure may be insufficient to drive flow through the heat exchanger and in such conditions an ejector may be used. Thus a portion of the air from the compressor 40 may be tapped from the path between the supply check valve 60 and the heat exchanger 46. The tapped flow passes to an ejector 76 which operates to draw a cooling stream of ram air through the heat exchanger 46 via a control valve 78 and then exhausts the flow overboard via a ram ejector control valve 80. Alternatively a fan may be provided to draw the stream ram air through the heat exchanger 46.

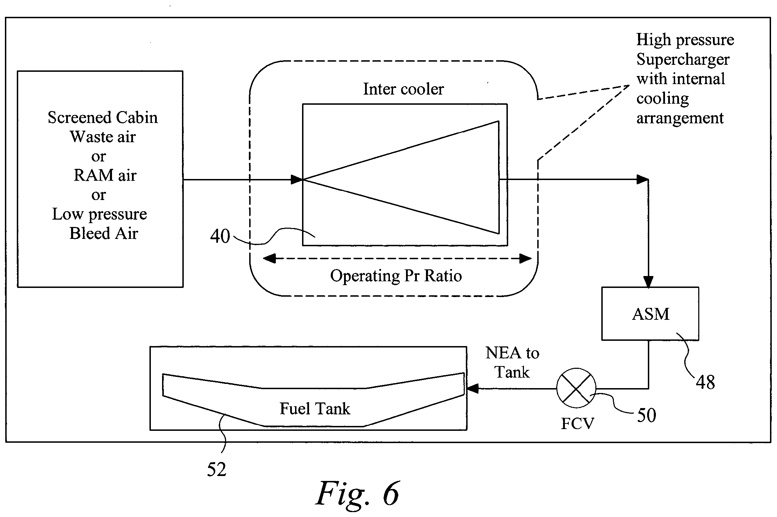

Referring now to the embodiments illustrated in Figures 6 to 8, in these arrangements, a high pressure supercharger with an internal cooling arrangement is provided to ensure that, although a single stage compressor or supercharger is used, the temperature of the compressed air delivered thereby does not exceed the maximum allowed inlet temperature to the ASM. With current technology, the typical maximum inlet temperature is in the region of 77°C, although this figure may rise as ASM technology develops. In the embodiments below, similar components are given similar reference numerals and will not be described in detail again.

Referring to Figure 6, low pressure air in the form of one or more of screened cabin waste air, ram air or low pressure bleed air is supplied to a single stage compressor 40 having an internal cooling arrangement comprising a heat exchanger cooled by cabin waste air, ram air or other available fluids, to provide compressed air at a temperature below the maximum inlet temperature of the ASM 48. The NEA fraction from the ASM passes through a flow control valve 50 to the fuel tank 52.

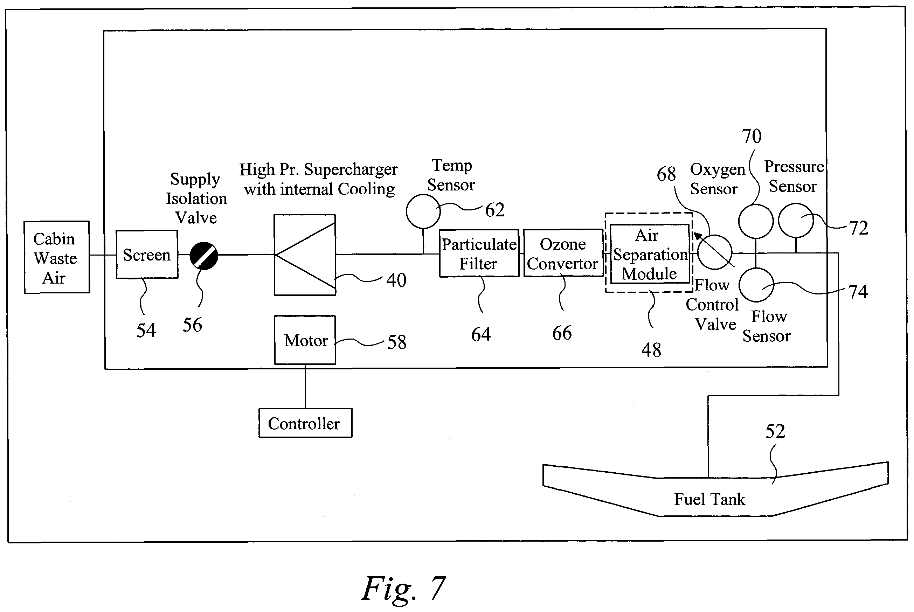

Referring now to Figure 7, the compressor 40 is driven by a motor 58 as previously. When the inert gas concentration in the fuel tank is high and the inerting system is on idle, the compressed air output from the compressor 40 may be diverted and used for other applications including, but not limited to, pressurisation of an on board water compartment; pneumatic applications such as operation of a thrust reverser, and providing high pressure air for engine start.

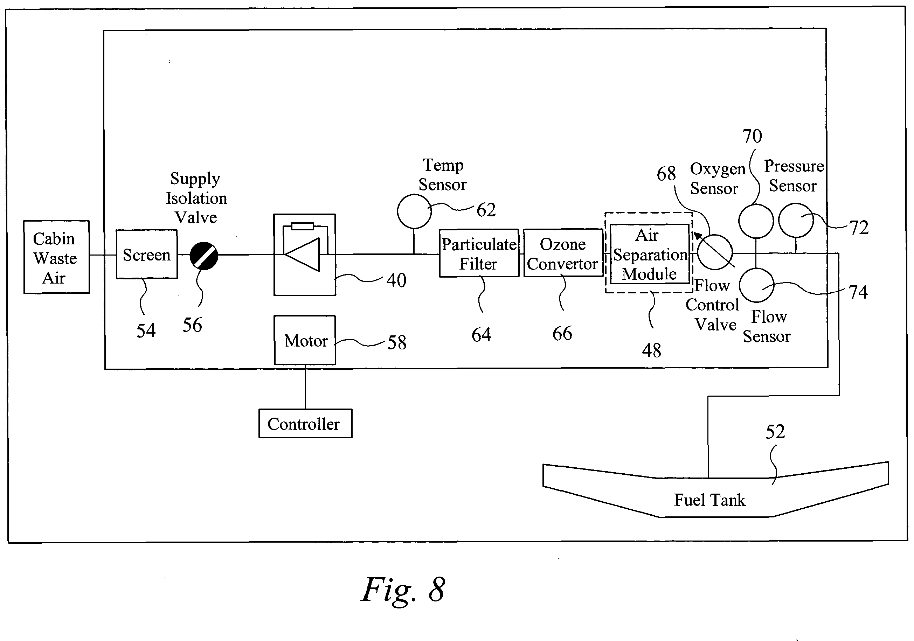

Referring now to the embodiment of Figure 8, this is broadly similar to the embodiment of Figure 7 but includes a feedback path which recycles cooled air from the compressor 40 back to its inlet to cool the flow. In this scheme the cold gas recirculation involves tapping off delivery flow, cooling it and then injecting it at delivery pressure into the machine delivery chamber to reduce the heat of compression.

## Claims

1. An on board inert gas generation system for use in an aircraft having an on board source of low pressure air, said gas generation system including a positive displacement compressor (20,40) having an inlet for receiving a portion of said low pressure air, and an outlet in flow communication with an air separation module (24,48), the positive displacement compressor further including an integrated cooling means provided internally of the compressor for cooling the compressed air delivered by said compressor.

2. An on board inert gas generation system according to Claim 1, wherein said positive displacement compressor (20,40) is a single stage compressor.

3. An on board inert gas generation system according to Claim 1 or Claim 2, wherein said integral cooling means comprises a heat exchanger cooled by cabin waste air, ram air or other available fluids.

4. An on board inert gas generation system according to any of the preceding Claims, wherein a portion of the cooled output from said compressor (20,40) is passed to the inlet thereof.

5. An on board inert gas generation system according to any of the preceding Claims, wherein the output from said air separation module (24,48) may be directed to supply power and/or pressure to one or more other aircraft components.

6. An aircraft incorporating an on board inert gas generating system according to any preceding claim.

7. A method of operating an on board inert gas generation system in an aircraft having a source of low pressure air, which comprises the steps of:
supplying a portion of said low pressure air to a positive displacement compressor (20,40), having an integrated cooling means provided internally of the compressor, and
supplying compressed and cooled air from said positive displacement compressor (20,40) to an air separation module (24,48).

## Patentansprüche

1. Bordeigenes Inertgaserzeugungssystem zur Anwendung in einem Flugzeug, das eine bordeigene Niederdruckluftquelle aufweist, wobei das Gaserzeugungssystem einen Verdrängungsverdichter (20, 40) mit einem Einlass zur Aufnahme eines Teils der Niederdruckluft und einen Auslass in Strömungsverbindung mit einem Lufttrennungsmodul (24, 48) beinhaltet, wobei der Verdrängungsverdichter weiter ein innerhalb des Verdichters angebrachtes integriertes Kühlmittel zum Kühlen der von dem Verdichter gelieferten Druckluft umfasst.

2. Bordeigenes Inertgaserzeugungssystem nach Anspruch 1, wobei der Verdrängungsverdichter (20, 40) ein einstufiger Verdichter ist.

3. Bordeigenes Inertgaserzeugungssystem nach Anspruch 1 oder Anspruch 2, wobei das integrale Kühlmittel einen durch Kabinenabluft, Stauluft oder andere verfügbare Fluide gekühlten Wärmetauscher umfasst.

4. Bordeigenes Inertgaserzeugungssystem nach einem der vorhergehenden Ansprüche, wobei ein Teil der gekühlten Abgabe des Verdichters (20, 40) zu dem Einlass davon weitergeleitet wird.

5. Bordeigenes Inertgaserzeugungssystem nach einem der vorhergehenden Ansprüche, wobei die Abgabe von dem Lufttrennungsmodul (24, 48) weitergeleitet werden kann, um einer oder mehreren anderen Flugzeugkomponenten Energie und/oder Druck zuzuführen.

6. Flugzeug, in das ein bordeigenes Inertgaserzeugungssystem nach einem der vorhergehenden Ansprüche eingebaut ist.

7. Verfahren zum Betrieb eines bordeigenen Inertgaserzeugungssystems in einem Flugzeug, das eine Niederdruckluftquelle aufweist, umfassend die folgenden Schritte:
Zuführen eines Teils der Niederdruckluft zu einem Verdrängungsverdichter (20, 40), der ein innerhalb des Verdichters angebrachtes integriertes Kühlmittel aufweist, und
Zuführen von verdichteter und gekühlter Luft von dem Verdrängungsverdichter (20, 40) zu einem Lufttrennungsmodul (24, 48).

## Revendications

1. Système embarqué de génération d'un gaz inerte pour son utilisation dans un aéroplane possédant une source embarquée d'air basse pression, ledit système de génération de gaz comprenant un compresseur volumétrique (20, 40) possédant une entrée pour la réception d'une portion dudit air basse pression et une sortie en communication d'écoulement avec un module de séparation d'air (24, 48), le compresseur volumétrique comprenant en outre un moyen de refroidissement intégré prévu à l'intérieur du compresseur pour le refroidissement de l'air comprimé délivré par ledit compresseur.

2. Système embarqué de génération d'un gaz inerte selon la revendication 1, dans lequel ledit compresseur volumétrique (20, 40) est un compresseur monoétage.

3. Système embarqué de génération d'un gaz inerte selon la revendication 1 ou 2, dans lequel ledit moyen de refroidissement solidaire comprend un échangeur de chaleur refroidi par l'air vicié de la cabine, l'air dynamique ou d'autres fluides disponibles.

4. Système embarqué de génération d'un gaz inerte selon l'une quelconque des revendications précédentes, dans lequel une portion de la sortie refroidie émanant dudit compresseur (20, 40) est transférée à l'entrée de ce dernier.

5. Système embarqué de génération d'un gaz inerte selon l'une quelconque des revendications précédentes, dans lequel la sortie dudit module de séparation d'air (24, 48) peut être dirigée pour alimenter de l'énergie et/ou de la pression à un ou plusieurs autres composants de l'aéroplane.

6. Aéroplane dans lequel est incorporé un système embarqué de génération d'un gaz inerte selon l'une quelconque des revendications précédentes.

7. Procédé de mise en oeuvre d'un système embarqué de génération d'un gaz inerte dans un aéroplane possédant une source d'air basse pression, qui comprend les étapes consistant à :
alimenter une portion dudit air basse pression à un compresseur volumétrique (20, 40) possédant un moyen de refroidissement solidaire prévu à l'intérieur du compresseur ; et
alimenter de l'air comprimé et refroidi à partir dudit compresseur volumétrique (20, 40) à un module de séparation d'air (24, 48).
